# EUROPEAN PATENT SPECIFICATION

(11) **EP 1 522 849 B1**
(45) Date of publication and mention of the grant of the patent: **19.03.2008**
(21) Application number: 04001271.8
(22) Date of filing: 22.01.2004
(51) Int. Cl.: G01N 30/74, G01N 21/05, G01N 21/11

(54) **Fluid analyzing cell using a cavity with pipeline**
Flüssigkeitsanalysezelle enthaltend einen Hohlraum mit Rohrleitung
Cellule d'analyse de fluide utilisant une cavité munie d'une conduite

(43) Date of publication of application: 13.04.2005
(73) Proprietor: Agilent Technologies, Inc., Santa Clara, CA 95051 (US)
(72) Inventor: Mueller, Jochen, 76337 Waldbronn (DE)
(74) Representative: Barth, Daniel Mathias

(56) References cited:
- EP-A- 0 335 268
- EP-A- 1 306 661
- US-A- 5 054 920
- US-A- 5 599 503

## Description

### Background art

The present invention relates to a fluid analyzing cell.

Fluid analysis is becoming increasingly important in chemical analysis especially for mixed chemical compounds. One example for fluid analysis is liquid chromatography measurement, wherein a liquid with the chemical components in a chromatography cell is illuminated with light of different wavelength and the light absorption of the liquid is measured. The wavelength dependent absorption provides information about chemical components in the liquid.

In fluid analysis measurement results often depend on design parameters of the cell or the measurement system, resulting in analysis error.

US-A-5,917,606 discloses s photometric flow apparatus for sample analysis. US-5,054,920 discloses an attenuated total reflection (ATR) sample cell, wherein a flowing liquid sample is directed in a helical flow path against the internal wall of the flow jacket. US-A-5,599,503 discloses a detector cell. EP 335268 A2 discloses a detector cell for liquid chromatography, the teaching thereof forms the preamble to claim 1.

### Disclosure of the Invention

It is an object of the present invention to provide an improved fluid analyzing. Those objects are solved by the independent claims. Preferred embodiments of the invention are provided by the dependent claims.

During analysis the liquid flow can cause random noise & wander resulting in measurement errors or even preventing clear and repeatable results. One origin of such noise is the velocity of the fluid, which causes turbulence. If two or more liquids with different refractive indices are mixed, noise & wander can be seen due to imperfect mixing. The invention provides an analysis cell wherein random noise & wander during measurement is reduced. Additionally the mixing behavior is improved resulting in a further improvement. The invention also provides a method for analyzing a fluid, wherein results are improved due to less noise & wandering.

According to the invention the analysis cell comprises a cavity adapted for receiving a fluid. A detection unit for detecting a property of the fluid is coupled to the cavity. A pipeline for supplying a fluid is connected to an orifice of said cavity. According to one aspect of the invention the pipeline comprises a curvature. In another aspect the pipeline is connected to the cavity in such manner, that a fluid is streaming into the cavity along a sidewall of the cavity. Therefore at least some parts of a wall of the pipeline are connected almost parallel to the curved sidewall. In other words the angle between said parts of the wall of the pipeline and the sidewall of the cavity is very small, providing a stream along the sidewall of the cavity.

Thus according to the invention the fluid is mechanically forced to flow along a curvature in the area of the orifice. The fluid will make a smooth transition when streaming into the cavity without flowing around sharp edges. Turbulence caused by such edges will be prevented.

In a preferred embodiment of the invention at least a first part of the detection unit is coupled to a first opening of the cavity having a first radius and a second part of the detection unit is coupled to a second opening having a second radius.

In another preferred embodiment of the invention the curved pipeline comprises a uniformly continuous curvature following the orifice between the curved pipeline and a sidewall of the cavity. In accordance to a preferred embodiment of the invention the curved pipeline comprises a spiral curvature following the orifice. Such pipelines result in a uniformly continuous flow of the liquid. Any turbulence caused by sharp edges or different velocities of one area in the liquid compared to another are prevented.

In a preferred embodiment of the invention the curved pipeline with a spiral curvature comprises an angle dependent inner and an outer radius. In the area of the orifice between the pipeline and the cavity the outer radius of the pipeline is similar to the radius of the cavity. Hence the outer sidewall of the curved feeding pipe is blended into the sidewall of the cavity with a smooth transition. Any sharp edges or rough transition causing turbulence are prevented.

A further embodiment relates to an aspect, where the diameter of the curved pipeline is less than half of the radius of the cavity of the cell body in the area of the orifice between the curved pipeline and the curved sidewall of the cavity. Preferably, the curved pipeline comprises a diameter in the range of 0.1 to 0.3 of the radius of the cavity.

In accordance with a preferred embodiment the cavity is formed in a conical or in a cylindrical shape. A conical shape provides a better optical path in a chromatographic system due to the spreading of the emitting light rays.

According to an embodiment of the invention the cavity is arranged in a cell body having a volume and further having a first side and a second side of a surface, the second side preferable opposite to the first side. Thus the analyzing cell comprises a cavity within said cell body, the cavity having a curved sidewall and further comprising a first opening to the first side of the surface of the cell body and a second opening to the second side of the surface of the cell body.

Preferable a first cell window is arranged on said first side and a second cell window is arranged on said second side of the surface according to yet another embodiment.

In an embodiment of the invention, the cell body comprises a first recess on the first side of the cell body The recesses are provided as a dent, a small hollow or an imbedding and formed around the cavity. According to an embodiment of the invention the cell body comprises a curved sidewall shaped around the cavity and the at least first recess, on which the pipeline is connected.

Alternately the analyzing cell comprises a tube arranged within the cavity. In this embodiment the length of the cavity within the cell body is then defined by the distance between the first and second side of the surface less the depth of the at least first recess. The tube comprises a tube length larger then the length of the cavity. Thus some parts of the tube are rising above the lower surface of the at least first recess. The cell further comprises at least one curved feeding pipe connected to an orifice on said some parts of the tube rising above the lower surface. Preferably the cavity is completely filled by the tube and of the same material as the cell body. In a further embodiment the cell body comprises a second recess formed around an opening of the cavity on the second side.

According to yet another embodiment of the invention the analysis cell comprises at least one curved pipeline for supplying a liquid to said cavity within said cell body. The curved pipeline is connected to an orifice on a curved sidewall of the cavity.

In an embodiment of that invention the curved pipeline or the curved feeding pipe is provided as a curved feeding channel within the cell body. In another embodiment of the invention the curved pipeline or the curved feeding pipe is shaped as a curved recess in the first side of the surface of the cell body with an orifice on the curved sidewall of the cavity. In an embodiment a recess in the surface of the first side comprises the shape of a half-tube.

The liquid flow in the curved pipeline or feeding pipe respectively as well as in the cavity is mechanically forced to run along the shape of the curved pipeline. The optical path lies within the cavity or tube respectively and preferable between parts of the detection unit. Due to the mechanical force, there will be no flow edges within the optical path of the cavity to disturb the homogeneity of the flow while the liquid has to change flow direction in the area of the orifice between the curved pipeline and the cavity. The flow through the curved pipeline and the cavity will therefore remain laminar or orderly forced respectively even for high flow velocities and not become undirected turbulent. Such laminar flow will reduce any random noise & wander significantly. Furthermore mixing between two liquids with different refractive indices is improved.

In accordance with a preferred embodiment of the invention the analysis cell further comprises a second pipeline for supplying a liquid to the cavity wherein the second pipeline is connected to a second orifice on the curved sidewall of the cavity. In another preferred embodiment of the invention a second recess is formed on the second side of the cell body's surface around the second opening. A small wall around the second opening will remain intact. A second curved pipeline or feeding pipe is connected to an orifice in the remaining wall around the second opening. Alternately the pipeline is shaped as a recess in the second side of the surface.

Therefore the analysis cell comprises a flow-in and a flow-out path for the liquid wherein the optical path lies between the first and the second cell window. Due to the circular-shaped pipelines turbulences are reduced in the area wherein the liquid has to change the flow direction.

In an embodiment of the method for using an analysis cell the liquid is supplied from a curved pipeline to the cavity of the cell body. The method further comprises the step of detecting a property of the fluid.

Preferably the step of supplying comprise the step of mechanically forcing the liquid to run in a spiral-like manner such that there are no flow edges within the optical path to disturb the homogeneity of the flow while the liquid has to change the flow direction into the cell. Thus the step of feeding the liquid into and out of the cavity comprises the steps of forcing the liquid along a curved direction, wherein the direction of the curvature does not change in the area into or out of the cavity.

In an embodiment of the invention, the step of detecting a property comprises the step of emitting light into the cavity and determining the absorption of the light within the liquid. In this embodiment of the invention the liquid fed to the cavity gains a preferred direction and keeps that direction when flowing into the cell. The preferred direction reduces turbulence generated during the flow through the orifice.

### Brief Description of Drawings

Other objects and many of the attendant advantages of the present invention will be readily appreciated and better understood by reference to the following detailed description when considering the invention in connection with the accompanied drawings. However the embodiments of the present invention are not restricted to the examples and drawings discussed herein and can also be combined together or used in connection with different analysis systems or flow through cells in other analysis systems like for example in spectral photometric systems. Features that are substantially or functionally equal or similar will be referred to with the same reference signs.

Figure 1 shows a schematic illustration of liquid chromatographic system according to a first embodiment of the present invention.

Figure 2 shows a schematic illustration of a cell body according to a second embodiment of the present invention.

Figure 3 shows a schematic illustration of a cell body's area according to the first embodiment of the present invention.

Figure 4 shows a schematic illustration of a cavity's opening with a feeding pipe according to the second embodiment of the present invention.

Figure 5 shows a schematic illustration of a cavity's opening with a feeding pipe according to a third embodiment of the invention

Figure 6 shows a diagram of a chromatogram comparing an embodiment of the present invention with a known liquid chromatography cell.

Figure 7 shows a schematic illustration of a cell body's area according to the fourth embodiment of the present invention.

Figure 8 shows a schematic illustration of a cavity's opening with a feeding pipe according to a fifth embodiment of the invention

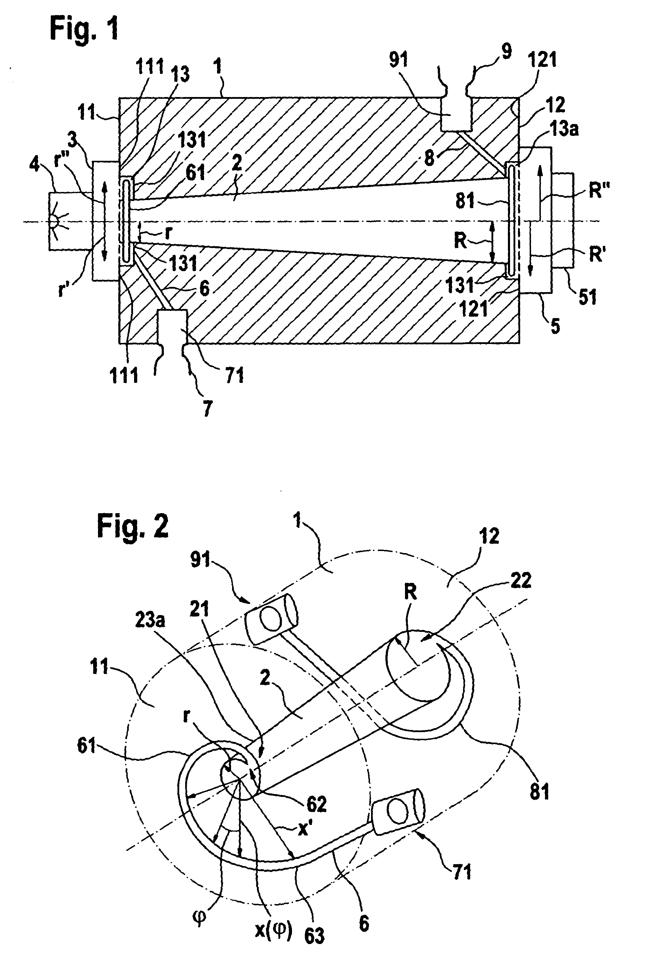

Referring now in greater detail to the drawings, Figure 1 shows a schematic illustration of a first embodiment of the present invention providing an analysis cell for liquid chromatography in accordance to the present invention within a part of the liquid chromatographic system.

The liquid chromatographic cell comprises a cell body 1 having a volume, a surface and a first side 11 and second side 12 opposite to the first side on the surface. The cell body is preferably made of steel or other materials like ceramics or metals with very good temperature coefficients. A recess 13 is formed in the first side 11 and second side 12, having a recessed surface 131. The recesses are formed in a ring like shape, having an outer radius r" or R" respectively and an inner radius r' or R' respectively.

Furthermore a cavity 2 is formed within the cell body 1. The cavity comprises a first opening with the radius r in the area of first side 11 not recessed. The radius r is slightly smaller than the radius r', resulting in a small ring shaped wall remaining. A second opening is formed on the second side of the cell body 1 in the same way. The radius R of the second opening is bigger than the radius r, but slightly smaller than the inner radius R' of the second recess. Thus a small wall between the opening and the surrounding recess 13 is formed. One can see this structure also as a cavity 2 filled with a tube, whose sidewall is rising above the recess 13 on the first and second side. The tube comprises the same material as the cell body and completely fills the cavity.

Due to the different radiuses on both sides of the cell body, the cavity 2 is formed in a conical shape having a smaller radius r at the first opening on the first side 11 and a bigger radius R on the second side 12.

On the first side 11 a cell window 3 is arranged on the first recess 13 and partly on areas 111 of the surface of the first side 11. It is also directly connected to the remaining parts of the wall between the opening and the recess 13. An illumination system 4 is placed on the cell window 3. The illumination system emits light of different wavelength through the cell window into the cavity 2. The material of the cell window is transparent to the light radiated by the illumination system. For ultra violet light starting at 190 nm for example the cell window 3 is made of quartz glass. For other wavelength or frequencies cheaper and similar transparent materials can be used, for example normal glass or PMMA. The typical range in liquid chromatography is 190nm up to 900nm.

The illumination system 4 used in the liquid chromatographic system provides white light including the whole visible spectra, but can also provide, for example, laser light with a predefined wavelength.

A second cell window 5 is arranged on the second recess of the second side 12 of cell body 1. Parts of the surface 121 of the second side 12 as well as the opening of cavity 2 are covered by the cell window 5. A detector system 51 is arranged opposite to the illumination system 4 on the side of the cell window 5 for measuring the amplitude and wavelength of the time dependent signal. The detector might also include additional optics for focussing the incoming light. It can be arranged on the cell window using ceramics or other materials with low temperature drift, thus reducing any temperature effects in the detector system. The detector system might comprise a sensor array, preferable a semiconductor diode sensor array.

For feeding liquid into the cavity 2 a spiral-formed pipeline 6 is arranged in the recess 13 of side 11 around the remaining wall or ring respectively between the recess 13 and the cavity 2. The pipeline has a uniformly continuous curvature in the area of the recess with a decreasing spiral radius. One end of the pipeline 6 is connected to an orifice in the wall between the recess and the cavity 2 providing a flow-in for the liquid into the cavity 2.

The second end of the pipeline 6 is connected to a supply unit 7 outside the cell body 1 for supplying liquid and the chemical components to be analyzed. Due to the spiral curvature of the pipeline 6 the liquid is mechanically forced to run in a spiral like shape and then with a silent transition into the cell core and the cavity 2. Thereby the liquid turns its overall direction by 90°. However there are no sharp edges, on which the flow velocities are strongly different between small parts of the liquid. The solution for the Navier-Stokes equation will result in a laminar flow through the pipeline the orifice and the cavity. The Reynolds number characterizing the flow remains small. Due to the lack of sharp edges any possibility of turbulence is prevented.

On the other side of the cavity an outlet area comprising an orifice as well as a spiral pipeline 81 and 8 connected to the orifice is formed. The second pipeline 8 is connected to an area 9.

In this embodiment of the invention the liquid is fed into the pipeline 6 via the supply unit 7 and 71. The illumination system will emit light, which might be absorbed partly by the liquid flowing through the cavity 2. The conical shape of the cavity compensate the spreading of light due to diffraction and other effects. The wavelength dependent amplitude of the light is measured by the spectrometer 51 and taken as a reference. Due to the reference any static effects will be compensated. Then the chemical component is added and mixed with the liquid. The spiral shape of the pipeline allows a good mixing and prevents any turbulence causing refraction changes in the liquid visible in the spectrometer. The absorption is measured by the spectrometer 51 again and processed together with the reference data.

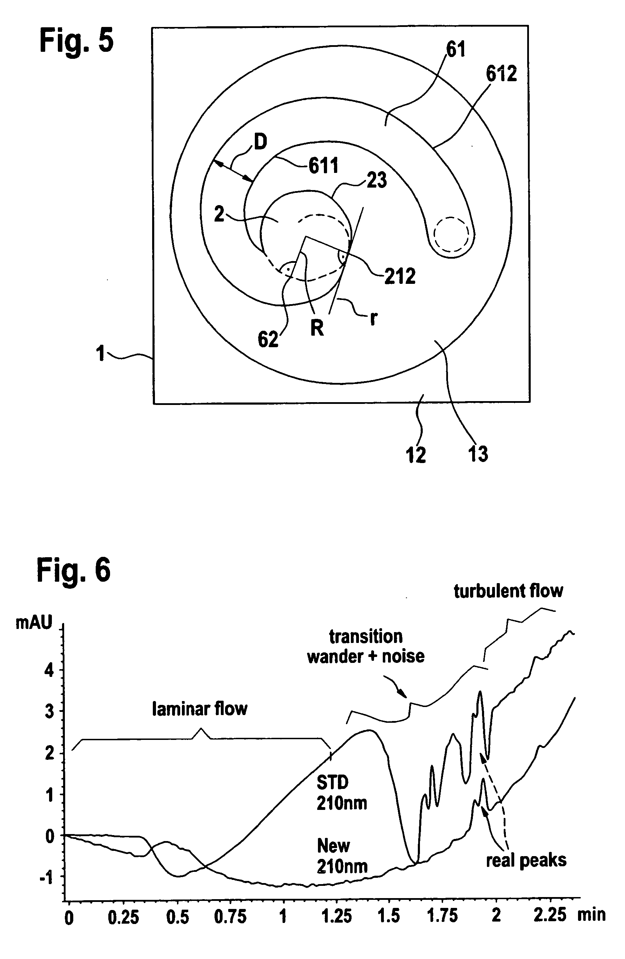

An example of such measurement can be seen in figure 6. The chromatogram shows a comparison between a standard cell and a liquid chromatographic cell according to an embodiment of the invention. The X-axis shows the time after the chemical components are added to the liquid, while the Y-axis shows the relative absorption for a specific wavelength. As one can see from the figure 6 the measurement data of the standard cell STD shows a strong signal change for a wavelength of 210nm beginning at roughly 90 seconds after adding the component. Those changes have their origin in the turbulences the caused by the high flow velocity of 5ml/min as well as in the imperfect mixing between the liquid and the chemical component. Absorption by the chemical component can not be clearly identified.

On the contrary, the curve "New" shows data measured with a liquid chromatographic system with a cell body according to the invention. As one can see the turbulence induced noise is strongly reduced while at around two minutes some real peaks can be identified, giving information about the chemical components and their concentration. With this invention the peak forms of the signals become better in symmetry and the peaks are now better comparable to a Gaussian profile. Peaks that could not be identified before as such are now clearly seen due to the new flow geometry. It is therefore possible to distinguish between turbulence-induced noise and real peaks even for high flow velocities. Additionally cells according to the embodiments of the invention provide better flushing behaviour.

A detailed view of the cell body according to a preferred embodiment of the invention can be seen in figure 2. In this The cell cavity 2 has a conical shape with a radius r at an opening of an inlet area 21 and a second radius R at an opening of an outlet area 22.

The cavity 2 comprises an orifice 62 at the inlet area 21, on which the curved pipeline 61 is connected. The pipeline 61 is formed as a counter clockwise spiral-formed recess in the surface of side 11, starting from the orifice 62 to the point 63. The recess may be formed by an etching or a milling process. At point 63 the recess makes a transition into a tube channel 6 connected to the supply area 71 within the cell body 1. The spiral-formed recess is defined by different radiuses x(ϕ) depending of the angle ϕ. Starting from the orifice 62, wherein the spiral-formed pipeline 61 comprises the smallest radius the radius increases to the point 63.

The cell window, -not shown here- which is arranged on the surface of side 11 does not include a recess. Thus the recess 61 in the surface of side 11 along with the cell window comprises the shape of a spiral formed half-tube.

Of course it is possible to form a recess in the cell window as well. However the window must be arranged properly, so that both recesses are opposite to each other. The pipeline itself can also be built in the cell body directly as well.

In the outlet area 22 a second curved pipeline 81 is provided as a recess on side 12 of the cell body. The pipeline 81 is connected to the outlet 91, which is also build within the cell body 1. The curvature of the second recess 81 on side 12 respectively is also formed counter clockwise. Thus, the overall liquid flow between the pipeline 61, the cavity 2 and the pipeline 81 comprises the same continuous curvature. The liquid flowing into the pipeline 81 will make a smooth transition without causing turbulence at the outlet area 22.

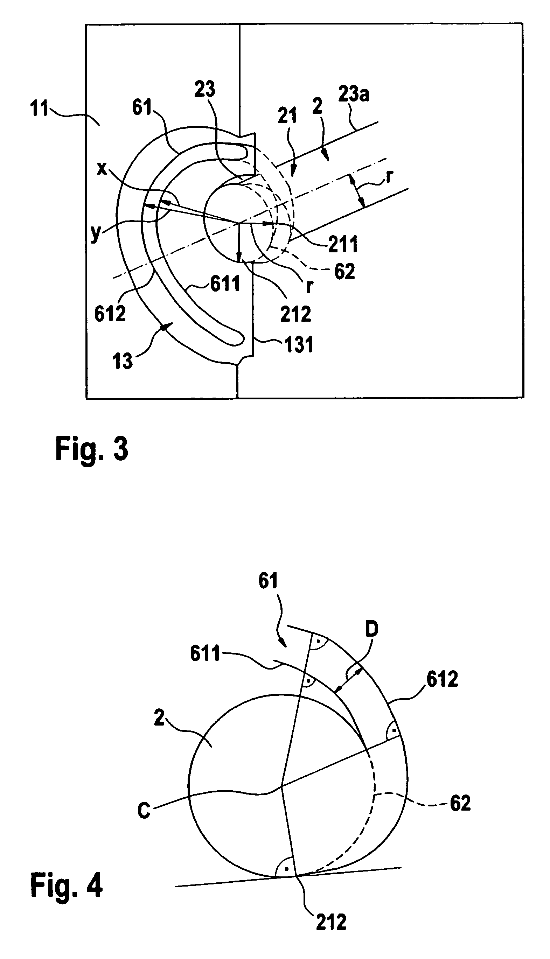

Figure 3 shows a detailed view of the inlet area according to another embodiment of the invention. For a better understanding of the embodiment of the invention the cell body is cut perpendicular to side 11. The inlet area 21 is equal to the inlet area of the embodiment according to figure 1 except for the cavity's shape. The cavity according to the embodiment of figure 3 is cylindrical, contrary to the conical shape of the cavity 2 according to figure 1. However a recess 13 with a bottom 131 is formed on the first side 11 of the surface. Between the cavity 2 and the recess 13 a small circle shape wall 23 remains intact. Thus the structure can be seen as a cavity filled with a tube, wherein the outer wall of the tube becomes the sidewall 23a and is connected to the sidewall of the cavity except for part 23.

Furthermore a spiral formed pipeline is arranged on the recess. In this view the pipeline is cut parallel to side 11, thus comprising a first wall 611 with an inner radius x and a second sidewall 612 with an outer radius y. As one can see the inner sidewall 611 is connected to the sidewall 23 at the area 211, wherein the radius r is almost equal to the angle depending radius x. The outer sidewall is connected at area 212 to the sidewall 23. Between areas 211 and 212 the orifice 62 is formed. Any liquid in the pipeline 61 is mechanically forced by its sidewalls to move with a silent transition into the inlet area 21 and the cavity 2 through the orifice 62 and then turns its overall direction by 90° and moves along the cavity 2. The mechanical forced geometry provided by the pipeline is limited to the inlet and outlet area.

Preferably in the embodiments of the invention the same structure comprising a pipeline with the same curvature direction is arranged in a recess near the outlet area of the cavity 2. This allows to build the cell body independent from the curved pipelines. No special structure has to be manufactured into the cell body itself which makes the cell part cheaper.

Figure 4 shows a detailed top view of the opening of the cavity 2 as well as the cavity's orifice 62 connected to the spiral formed pipeline 61 according to the embodiment of figure 2. The diameter D of the pipeline 61 in figure 4 is about half of the cavity's radius R. Using a smaller diameter D of the curved pipeline 61 compared to the cavity's radius, the possibility of turbulence, especially at high liquid velocities are reduced and the mixing behaviour becomes better. According to this embodiment of the invention the center of the cavity's opening C and the center of the radius of the inner sidewall 611 and the outer sidewall 612 are the same. The outer sidewall 612 of the pipeline 61 is smoothly blended into the sidewall of the cavity 2. At the area 212 the cavity's radius r is similar to the radius of the outer sidewall 612 resulting in a smooth transition without sharp edges.

A similar detailed top view of another embodiment of the present invention is shown in figure 5. On side 12 of the rectangular shaped cell body 1 a recess 13 is formed in the shape of an ellipsoid. Within the recess a cavity 2 with an opening and a surrounding sidewall 23 rising above the bottom of the recess 13 are formed. The opening comprises the radius R. A tube or feeding pipe 61 respectively is arranged on the recess, having a diameter D and an inner sidewall 611 and an outer sidewall 612. The diameter D is about half the radius R of the opening. The tube or feeding pipe 61 is formed in a spiral like manner, but is not be a spiral in the strict mathematical sense.

However the curvature is uniformly continuous and clockwise, the curvature direction does not change to counter clockwise along the pipeline 61. The sidewall of the cavity and the outer sidewall of the feeding pipe are connected in the area 212, wherein they share the same radius and curvature. This is clarified further by the tangent line T. The inner sidewall 611 is also connected to the cavity's sidewall, forming a slightly round edge. However this edge does not produce any turbulence in a liquid due to a preferred flow direction given by the curvature direction of the feeding pipe. At the end the pipeline 61 is connected to a further pipeline illustrated by the dotted circle.

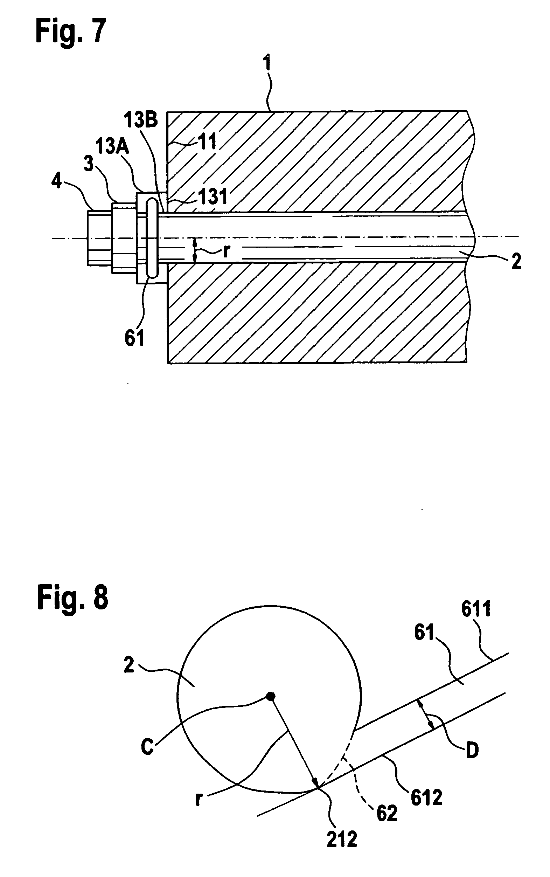

Another embodiment according to the invention can partly be seen in figure 7. The cell body 1 comprises a first side 11 without any recess and a cavity 2 within the cell body 1. A gasket ring 13A is arranged on the first side on top of the area 131. The gasket ring 13A comprises a cavity 61 or a channel 61 within its material respectively. One end of that cavity is connected to an orifice on the inner sidewall 13B of the gasket ring 13A thereby providing a connection to the cavity 2. The spiral-formed channel 61 is connected to the inner side of the gasket ring's cavity as seen in figure 8. On top of the gasket ring 13A the cell window 3 is arranged and an illumination system is arranged on cell window 3.

A further embodiment according to an important aspect of the invention shows figure 8. A detailed top view of a cavity's opening and a pipeline 61 or recess respectively connected to an orifice 62 can be seen. The pipeline 61 comprises a diameter D, smaller than the radius r of the opening. However the pipeline 61 does not comprise a curvature. Nevertheless the outer wall 612 according to this view is connected almost parallel to the sidewall of the opening in the area 62. In other words the angle between the sidewall 612 of pipeline 61 or recess 61 respectively and the sidewall of the cavity is very small in the range of less than 10 degree. As one can see, sharp edges on the outer wall in the area of the orifice can be significantly reduced, if the virtual extension of the pipeline, shown by the dotted lines is not crossing the center C of the cavity's opening. This will allow a liquid to flow through the orifice along the sidewalls of the cavity. The smooth transition reduces turbulences.

A person skilled in the art may appreciate the various possibilities for arranging and forming the feeding pipe. The present invention is not restricted to spiral formed pipelines. For example it can be formed in a parabolic shape. However the direction of the sidewall in the area of the orifice and the pipeline's wall connected to it should comprise a continuous curvature following the orifice and not comprise of sharp edges to allow any liquid to make a smooth transition when flowing into the cavity 2. Due to a curvature, the liquid is mechanically forced along the curvature and has already gained a preferred direction when flowing through the orifice 62. The preferred direction the connection between the inner wall 611 and the sidewall 23 does not produce turbulence, decreasing measurement quality.

It will also be appreciated that different forms of pipelines are possible. It is possible to include them in or outside the cell body as channel pipelines, tubes or recesses as shown in the examples. The feeding pipes may comprise turns of more or less than 360° degree depending on the application. The may even not comprise a curvature as long as according to the invention at least some parts of the sidewall make a smooth transition without edges into the curved sidewall of the cavity.

## Claims

1. An analysis cell arranged in a flow path of a fluid to be analyzed, comprising:
a cavity (2) adapted for receiving the fluid,
a detection unit coupled to the cavity for detecting a property of the fluid by emitting light into the cavity and determining the absorption of the emitted light in the fluid,
a pipeline (61) connected to an orifice (62) of said cavity (2) for supplying the fluid into said cavity (2), and
a first cell window (3) arranged on a first opening of said cavity (2) and a second cell window (5) arranged on a said second opening of said cavity (2), wherein the optical path lies between the first and the second cell windows, **characterized in that** the pipeline is curved and/or connected to the orifice (62) in such a way that the fluid is streaming in along a sidewall of said cavity (2),

2. Analysis cell of claim 1, wherein at least a first part of the detection unit (4, 51) is coupled to a first opening of the cavity (2) having a first radius (R) and a second part of the detection unit is coupled to a second opening of the cavity (2) having a second radius (r).

3. Analysis cell of claim 1 or 2, wherein the curved pipeline (61) comprises at least one of the following features:
a uniformly continuous curvature following said orifice (62);
a curvature in one direction following said orifice (62);
a spiral curvature;
an inner curvature radius (x) and an outer curvature radius (y), said outer curvature radius (y) of the curved pipeline (61) blending smoothly into the cavity.

4. Analysis cell of any one of the above claims, comprising at least one of the following features:
an outer curvature radius of said curved pipeline (61) is similar to a radius (r) of the cavity (2) in the area of the orifice (62);
the pipeline (61) comprises a diameter (D) less than half of a radius (r) of said cavity (61) in the area of said orifice (62);
the pipeline (61) comprises a diameter (D) in the range of 0,1 to 0,3 of a radius (r) of said cavity in the area of said orifice (62);
said cavity comprises a conical or a cylindrical shape;
a second pipeline (81) connected to said cavity (2).

5. The analysis cell of any one of the above claims, wherein at least a part of the detection unit is located close to the pipeline (61) for detecting the property of the fluid in an area where the fluid enters the cavity from the pipeline (61).

6. Analysis cell of any one of the above claims, wherein the cavity (2) is arranged in a cell body (1) having a first side (11) and a second side (12) of a surface, said cavity (2) comprising the first opening to said first side (11) and the second opening to said second side (12) of the surface.

7. Analysis cell of any one of the above claims, wherein the cell body (1) comprises at least a first recess (13) having a bottom (131) on the first side (11) of the cell body, said first recess (13) being formed around the cavity (2);

8. Analysis cell of claim 7, wherein the cell body (1) comprises a curved shaped sidewall formed between the cavity and the first recess (13, 13a), the pipeline (61) being connected to said sidewall.

9. Analysis cell of any one of the claims 7-9, wherein a tube having a sidewall is arranged within the cavity (2), said tube filling the cavity (2), said sidewall partly rising above the bottom (131) of said first recess (13, 13a) and the pipeline (61) is connected to said sidewall partly rising above the recess (13, 13a).

10. Analysis cell of any one of the claim 5-9, wherein said pipeline (61) comprises at least one of the following features:
a recess in the first side (11) of the cell body (1);
a channel in the first side (11) of the cell body (1).

11. A method for analyzing a fluid in a flow path, comprising the steps of:
- supplying the fluid from a pipeline (61) into a cavity (2) having a first cell window (3) is arranged on a first opening of said cavity (2) and a second cell window (5) is arranged on a second opening of said cavity (2), wherein the pipeline is curved and/or connected to an orifice (62) of said cavity (2) in such a way that the fluid is streaming in along a sidewall of said cavity (2), and
- detecting a property of the fluid by emitting light into the cavity and determining the absorption of the emitted light in the fluid, wherein the optical path lies between the first and the second cell windows.

## Patentansprüche

1. Analysezelle, die in einem Flüssigkeitspfad einer zu analysierenden Flüssigkeit angeordnet ist und Folgendes aufweist:
eine Kavität (2) zum Aufnehmen der Flüssigkeit,
eine mit der Kavität verbundene Detektionseinheit zur Detektion einer Eigenschaft der Flüssigkeit durch Einstrahlen von Licht in die Kavität und Ermitteln der Absorption des in die Flüssigkeit eingestrahlten Lichts,
eine mit einer Öffnung (62) der Kavität (2) verbundene Rohrleitung (61) zum Einleiten der Flüssigkeit in die Kavität (2), und
ein erstes Zellenfenster (3), das an einer ersten Öffnung der Kavität (2) angeordnet ist, und ein zweites Zellenfenster (5), das an einer zweiten Öffnung der Kavität (2) angeordnet ist, wobei sich der Strahlengang zwischen dem ersten und dem zweiten Zellenfenster erstreckt, **dadurch gekennzeichnet, dass** die Rohrleitung in der Weise gekrümmt und/oder mit der Öffnung (62) verbunden ist, dass die Flüssigkeit entlang einer Seitenwand der Kavität (2) einströmt.

2. Analysezelle nach Anspruch 1, bei der mindestens ein erster Teil der Detektionseinheit (4, 51) mit einer ersten Öffnung der Kavität (2), die einen ersten Radius (R) aufweist, und ein zweiter Teil der Detektionseinheit mit einer zweiten Öffnung der Kavität (2), die einen zweiten Radius (r) aufweist, verbunden ist.

3. Analysezelle nach Anspruch 1 oder 2, bei der die gekrümmte Rohrleitung (61) mindestens eines der folgenden Merkmale aufweist:
eine gleichmäßig kontinuierliche Krümmung, die der Öffnung (62) entspringt;
eine in einer Richtung verlaufende Krümmung, die der Öffnung (62) entspringt; eine spiralförmige Krümmung;
einen inneren Krümmungsradius (x) und einen äußeren Krümmungsradius (y), wobei der äußere Krümmungsradius (y) allmählich in die Kavität übergeht.

4. Analysezelle nach einem der obigen Ansprüche, die mindestens eines der folgenden Merkmale aufweist:
ein äußerer Krümmungsradius der gekrümmten Rohrleitung (61) entspricht etwa einem Radius (r) der Kavität (2) im Bereich der Öffnung (62);
die Rohrleitung (61) weist einen Durchmesser (D) auf, der kleiner als die Hälfte eines Radius (r) der Kavität (61) im Bereich der Öffnung (62) ist;
die Rohrleitung (61) weist einen Durchmesser (D) im Bereich von 0,1 bis 0,3 eines Radius (r) der Kavität im Bereich der Öffnung (62) auf;
die Kavität weist eine kegelförmige oder zylindrische Gestalt auf;
eine zweite Rohrleitung (81) ist mit der Kavität (2) verbunden.

5. Analysezelle nach einem der obigen Ansprüche, bei der mindestens einen Teil der Detektionseinheit in der Nähe der Rohrleitung (61) angeordnet ist, um die Eigenschaft der Flüssigkeit in einem Bereich nachzuweisen, in welchem die Flüssigkeit aus der Rohrleitung (61) in die Kavität eintritt.

6. Analysezelle nach einem der obigen Ansprüche, bei der die Kavität (2) in einem Zellenkörper (1) mit einer ersten Seite (11) und einer zweiten Seite 12 einer Fläche angeordnet ist, wobei die Kavität (2) die erste Öffnung an der ersten Seite (11) und die zweite Öffnung an der zweiten Seite (12) der Fläche aufweist.

7. Analysezelle nach einem der obigen Ansprüche, bei der der Zellenkörper (1) mindestens eine erste Aussparung (13) mit einem Boden (131) an der ersten Seite (11) des Zellenkörpers aufweist, wobei die erste Aussparung (13) um die Kavität (2) herum gebildet ist.

8. Analysezelle nach Anspruch 7, bei der der Zellenkörper (1) eine gekrümmte Seitenwand aufweist, die zwischen der Kavität und der ersten Aussparung (13, 13a) gebildet ist, und die Rohrleitung (61) mit der Seitenwand verbunden ist.

9. Analysezelle nach einem der Ansprüche 7 bis 9, bei der innerhalb der Kavität (2) ein Rohr mit einer Seitenwand angeordnet ist, wobei das Rohr die Kavität (2) ausfüllt, die Seitenwand teilweise über den Boden (131) der ersten Aussparung (13, 13a) hinausgeht und die Rohrleitung (61) mit der Seitenwand verbunden ist, die teilweise über die Aussparung (13, 13a) hinausgeht.

10. Analysezelle nach einem der Ansprüche 5 bis 9, bei der die Rohrleitung (61) mindestens eines der folgenden Merkmale aufweist:
eine Aussparung in der ersten Seite (11) des Zellenkörpers (1);
einen Kanal in der ersten Seite 11 des Zellenkörpers (1).

11. Verfahren zum Analysieren einer Flüssigkeit in Fließweg, wobei das Verfahren die folgenden Schritte aufweist:
- Einleiten der Flüssigkeit aus einer Rohrleitung (61) in eine Kavität (2) mit einem ersten Zellenfenster (3), das an einer ersten Öffnung der Kavität (2) angeordnet ist, und einem zweiten Zellenfenster (5), das an einer zweiten Öffnung der Kavität (2) angeordnet ist, wobei die Rohrleitung in der Weise gekrümmt und/oder mit einer Öffnung (62) der Kavität (2) verbunden ist, dass die Flüssigkeit entlang einer Seitenwand in die Kavität (2) einströmt, und
- Detektion einer Eigenschaft der Flüssigkeit durch Einstrahlen von Licht in die Kavität und Ermitteln der Absorption des eingestrahlten Lichts in der Flüssigkeit, wobei sich der Strahlengang zwischen dem ersten und dem zweiten Zellenfenster erstreckt.

## Revendications

1. Cellule d'analyse disposée sur une voie d'écoulement d'un fluide à analyser, comprenant :
une cavité (2) à même de recevoir le fluide ;
une unité de détection couplée à la cavité pour détecter une propriété du fluide en émettant de la lumière dans la cavité et en déterminant l'absorption de la lumière émise dans le fluide ;
une canalisation (61) raccordée à un orifice (62) de ladite cavité (2) pour fournir le fluide dans ladite cavité (2), et
une première fenêtre de cellule (3) disposée sur une première ouverture de ladite cavité (2) et une deuxième fenêtre de cellule (5) disposée sur une deuxième ouverture de ladite cavité (2) ;
dans laquelle le chemin optique se trouve entre la première fenêtre de cellule et la deuxième fenêtre de cellule ;
**caractérisé en ce que** la canalisation est courbée et/ou raccordée à l'orifice (62) de manière à ce que le fluide afflue le long d'une paroi latérale de ladite cavité (2).

2. Cellule d'analyse suivant la revendication 1, dans laquelle au moins une première partie de l'unité de détection (4, 51) est couplée à une première ouverture de la cavité (2) ayant un premier rayon (R) et une deuxième partie de l'unité de détection est couplée à une deuxième ouverture de la cavité (2) ayant un deuxième rayon (r).

3. Cellule d'analyse suivant la revendication 1 ou 2, dans laquelle la canalisation courbée (61) comprend au moins une des particularités suivantes :
une courbure uniformément continue suivant ledit orifice (62) ;
une courbure dans une direction suivant ledit orifice (62) ;
une courbure spirale ;
un rayon de courbure interne (x) et un rayon de courbure externe (y), ledit rayon de courbure externe (y) de la canalisation courbée (61) se fondant dans la cavité.

4. Cellule d'analyse suivant l'une quelconque des revendications précédentes, comprenant au moins une des particularités suivantes :
un rayon de courbure externe de ladite canalisation courbée (61) est similaire à un rayon (r) de la cavité (2) dans la région de l'orifice (62) ;
la canalisation (61) présente un diamètre (D) inférieur à la moitié d'un rayon (r) de ladite cavité (61) dans la région dudit orifice (62) ;
la canalisation (61) présente un diamètre (D) dans l'intervalle compris entre 0,1 et 0,3 d'un rayon (r) de ladite cavité dans la région dudit orifice (62) ;
ladite cavité présente une forme cylindrique conique ;
une deuxième canalisation (81) raccordée à ladite cavité (2).

5. Cellule d'analyse suivant l'une quelconque des revendications précédentes, dans laquelle au moins une partie de l'unité de détection est située à proximité de la canalisation (61) pour détecter la propriété du fluide dans une région où le fluide pénètre dans la cavité depuis la canalisation (61).

6. Cellule d'analyse suivant l'une quelconque des revendications précédentes, dans laquelle la cavité (2) est disposée dans un corps de cellule (1) comportant un premier côté (11) et un deuxième côté (12) d'une surface, ladite cavité (2) comprenant la première ouverture vers ledit premier côté (11) et la deuxième ouverture vers ledit deuxième côté (12) de la surface.

7. Cellule d'analyse suivant l'une quelconque des revendications précédentes, dans laquelle le corps de cellule (1) comprend au moins un premier retrait (13) comportant un fond (131) sur le premier côté (11) du corps de cellule, ledit premier retrait (13) étant formé autour de la cavité (2).

8. Cellule d'analyse suivant la revendication 7, dans laquelle le corps de cellule (1) comprend une paroi latérale de forme courbe formée entre la cavité et le premier retrait (13, 13a), la canalisation (61) étant raccordée à ladite paroi latérale.

9. Cellule d'analyse suivant l'une quelconque des revendications 7 à 9, dans laquelle un tube comportant une paroi latérale est disposé à l'intérieur de la cavité (2), ledit tube remplissant la cavité (2), ladite paroi latérale se dressant partiellement au-dessus du fond (131) dudit premier retrait (13, 13a) et la canalisation (61) est raccordée à ladite paroi latérale se dressant partiellement au-dessus du retrait (13, 13a).

10. Cellule d'analyse suivant l'une quelconque des revendications 5 à 9, dans laquelle ladite canalisation (61) comprend au moins une des particularités suivantes :
un retrait dans le premier côté (11) du corps de cellule (1) ;
un canal dans le premier côté (11) du corps de cellule (1).

11. Procédé pour analyser un fluide sur une voie d'écoulement, comprenant les étapes suivantes :
- la fourniture du fluide depuis une canalisation (61) dans une cavité (2) comportant une première fenêtre de cellule (3) disposée sur une première ouverture de ladite cavité (2) et une deuxième fenêtre de cellule (5) disposée sur une deuxième ouverture de ladite cavité (2) ; dans lequel la canalisation est courbée et/ou raccordée à un orifice (62) de ladite cavité (2) de manière à ce que le fluide afflue le long d'une paroi latérale de ladite cavité (2), et
- la détection d'une propriété du fluide en émettant de la lumière dans la cavité et en déterminant l'absorption de la lumière émise dans le fluide, dans lequel le chemin optique se trouve entre la première fenêtre de cellule et la deuxième fenêtre de cellule.
